# EUROPEAN PATENT SPECIFICATION

(11) **EP 4 455 368 B1**
(45) Date of publication and mention of the grant of the patent: **18.03.2026**
(21) Application number: 23169695.6
(22) Date of filing: 25.04.2023
(51) Int. Cl.: C25B 1/04, C25B 9/65, C25B 9/70, H01M 8/00, H01M 8/0208, H01M 8/2432, H01M 8/249, H01M 8/0276, H01M 8/12

(54) **SOC STACK COMPRISING A CONNECTION PLATE**
SOC-STAPEL MIT VERBINDUNGSPLATTE
EMPILEMENT DE SOC COMPRENANT UNE PLAQUE DE CONNEXION

(43) Date of publication of application: 30.10.2024
(73) Proprietor: Topsoe A/S, 2800 Kgs. Lyngby (DK)
(72) Inventor: HEIREDAL-CLAUSEN, Thomas, 3460 Birkerød (DK); RASS-HANSEN, Jeppe, 1671 Copenhagen V (DK); BLENNOW, Bengt Peter Gustav, 3050 Humlebæk (DK); NØRBY, Tobias Holt, 2600 Glostrup (DK); Nielsen, Martin Refslund, 3460 Birkerød (DK)
(74) Representative: Topsoe A/S

(56) References cited:
- EP-A1- 1 998 395
- EP-A1- 3 324 475
- WO-A1-2019/034855
- WO-A1-2020/126486
- WO-A1-98/57384
- US-A1- 2022 367 889

## Description

### FIELD OF THE INVENTION

The invention relates to a Solid Oxide Cell (SOC) stack, in particular a Solid Oxide Electrolysis Cell (SOEC) stack or a Solid Oxide Fuel Cell (SOFC) stack, comprising a connection plate between the SOC stack and a current collector and/or between SOC sub-stacks.

### BACKGROUND OF THE INVENTION

This invention can generally be used in a SOC stack - thus both in SOEC and SOFC mode even though for simplicity some parts of the description below relate to SOEC mode.

In SOC stacks which has an operating temperature between 600°C and 1000°C, preferably between 600°C and 850°C, several cell units are assembled to form the stack and are linked together by interconnects. Interconnects serve as a gas barrier to separate the anode and cathode sides of adjacent cell units, and at the same time they enable current conduction between the adjacent cells, i.e., between an anode of one cell and a cathode of a neighbouring cell. Further, interconnects are normally provided with a plurality of flow paths for the passage of process gas on both sides of the interconnect. To optimize the performance of a SOC stack, a range of positive values should be maximized without unacceptable consequence on another range of related negative values which should be minimized. Some of these values are:

| VALUES TO BE MAXIMIZED | VALUES TO BE MINIMIZED |
|---|---|
| - Process gas utilization | - Cost |
| - electrical efficiency | - Dimensions |
| - lifetime | - production time |
| | - fail rate |
| | - number of components |
| | - Parasitic loss (heating, cooling, blowers..) |
| | - material use |

Almost all the above listed values are interrelated, which means that altering one value will impact other values.

Some relations between the characteristics of process gas flow in the cells and the above values are mentioned here:

### Process gas utilization:

The flow paths on the interconnect should be designed to seek an equal amount of process gas to each cell in a stack, i.e., there should be no flow- "short-cuts" through the stack.

### Parasitic loss:

Design of the process gas flow paths in the SOC stack and its cell units should seek to achieve a low pressure loss per flow volume, which will reduce the parasitic loss to blowers.

### Electric efficiency:

The interconnect leads current between the anode and the cathode layer of neighbouring cells. Hence, to reduce internal resistance, the electrically conducting contact points (hereafter merely called "contact points") of the interconnect should be designed to establish good electrical contact to the electrodes (anode and cathode) and the contact points should nowhere be far apart, which would force the current to run through a longer distance of the electrode with resulting higher internal resistance.

### Lifetime:

It is desirable that the lifetime of an SOC stack is maximized, i.e. that in SOFC mode it can be used to produce as much electricity as possible and that in SOEC mode the amount of electrolysis product (e.g. H₂ and/or CO) is maximized. Stack lifetime depends on a number of factors, including the choice of the interconnect and spacer, on flow distribution on both process gas sides of the interconnect, evenly distributed protective coating on the materials, on the operating conditions (temperature, current density, voltage, etc), on cell design and materials, edge reoxidation which lowers the lifetime and many other factors.

### Cost:

The cost contribution of the interconnects (and spacers) can be reduced by not using noble materials, by reducing the production time of the interconnect and spacer, minimizing the number of components and by minimizing the material loss (the amount of material discarded during the production process).

### Dimensions:

The overall dimensions of a fuel stack are reduced when the interconnect design ensures a high utilization of the active cell area. Dead-areas with low process gas flow should be reduced and inactive zones for sealing surfaces should be minimized.

### Production time.

Production time of the interconnect and spacer itself should be minimized and the interconnect design should also contribute to a fast assembling of the entire stack. In general, *for every component the interconnect design renders unnecessary, there is a gain in production time.*

### Fail rate.

The interconnect and spacer production methods and materials should permit a low interconnect fail rate (such as unwanted holes in the interconnect gas barrier, uneven material thickness or characteristics). Further the fail-rate of the assembled cell stack can be reduced when the interconnect design *reduces the total number of components to be assembled and reduces the length and number of seal surfaces.*

### Number of components.

Apart from minimizing errors and assembling time as already mentioned, a reduction of the number of components leads to a reduced cost.

The way the anode and cathode gas flows are distributed in a SOC stack is by having a common manifold for each of the two process gasses. The manifolds can either be internal or external. The manifolds supply process gasses to the individual layers in the SOC stack by the means of channels to each layer. The channels are normally situated in one layer of the repeating elements which are comprised in the SOC stack, i.e. in the spacers or in the interconnect.

Solid oxide electrolysis cells (SOEC) can be used to convert H2O to H2, CO2 to CO, or a combination of H2O and CO2 to syngas (H2 and CO). This conversion occurs on the cathode side (fuel side) of the SOEC, where the cell comprises of Nickel containing layers in their reduced state. On the oxy side of the SOEC (the anode), oxygen is produced and is normally flushed with air.

When stacking the Solid Oxide Cells to an SOC stack, the cells are connected in series - separated by interconnects in an assembly known as a Single Repeat Unit (SRU). During production of the stack, the serial connected layers are heated and compressed together to form a tight stack. During this process, the mechanical load used to compress the stack components together will induce stress in the ceramic cells. A common failure mode is cell cracking, where the ceramic cell fractures because of the applied stress. If a single cell cracks in a stack, the entire stack has to be discarded, as a cracked cell will cause internal combustion in the stack during operation which will damage the remaining stack. Thus if 1 cell fails during production in a 100-cell stack, the entire stack is discarded regardless that the remaining 99 cells are ok.

To mitigate the issue of discarding a large number of well-functioning Single Repeat Units (SRUs) if one cell cracks during production of the stack, one can produce smaller stacks (stacks with fewer SRUs). These smaller sub-stacks can then be combined to a full-size stack after production of the sub-stacks, e.g. 4 sub-stacks with 25 SRUs is combined to a full 100 cell stack. If a cell cracks in a 25 cell sub-stack only 24 well-functioning SRUs are discarded, which increases overall yield. On top of that, sub-stacks are easier to handle, which might benefit some parts of production.

When combining sub-stacks to a full-size stack, the sub-stacks are stacked on top of each other to form one serial connected stack. There are two demands for the connection of the sub-stacks; 1) the connection needs to be able to transfer current from one sub-stack to the next, as the sub-stacks are connected in serial. This current transfer needs to be uniform across the stack footprint not to cause misdistribution in the sub-stacks. 2) the connection between the sub-stacks needs to be gas tight.

These described demands are present also for the interface in the ends of the full-size stack between the stack itself and the current collectors which may be present on each end of the full-size stack.

When connecting sub-stacks, or full-size stacks to adjacent current collectors as described above, there are (among others) the following problems: 1) enable uniform current transfer from one sub-stack to the next or from a full-size stack to an adjacent current collector with minimal loss (voltage drop) and 2) create a gas tight connection between the sub-stacks and/or between the full-size stack and the current collector.

The invention aims to accomplish this in a simple, robust design with few components and without need for a sealing step before the assembled stack (consisting of sub-stacks and/or connected adjacent current collectors) can be put into operation. A further problem solved by the invention is to accomplish the above described with elements with thermal expansion coefficients (TEC) approaching the TEC of the sub-stacks and thereby the full-size stack.

US2005016729 discloses a ceramic fuel cell(s) which is supported in a heat conductive interconnect plate, and a plurality of plates form a conductive heater named a stack. Connecting a plurality of stacks forms a stick of fuel cells. By connecting a plurality of stacks end to end, a string of fuel cells is formed. The length of the string can be one thousand feet or more, sized to penetrate an underground resource layer, for example of oil. A pre-heater brings the string to an operating temperature exceeding 700 DEG C., and then the fuel cells maintain that temperature via a plurality of conduits feeding the fuel cells fuel and an oxidant and transferring exhaust gases to a planetary surface. A manifold can be used between the string and the planetary surface to continue the plurality of conduits and act as a heat exchanger between exhaust gases and oxidants/fuel.

None of the above-described known art provides a simple, efficient solution to the above-described problems.

Therefore, with reference to the above listed considerations, there is a need for a simple and easy but still robust, effective and precise solution to produce an SOC stack comprising a contact plate.

These and other objects are achieved by the invention as described below.

### SUMMARY OF THE INVENTION

The solution for sub-stack assembly or a connection between a full-size stack and an adjacent current collector is a simple and robust connection made of 1) a thin plate made of electrically conducting material to conduct the current between the sub-stacks and/or between a full-size stack and an adjacent current collector, and 2) axial gaskets to ensure the leak tightness between the sub-stacks or between a full-size stack and an adjacent current collector.

The thin plate is made of electrically conducting material fit for operational conditions, for instance high temperature steel (Crofer). The plate is quite thin, for instance here 0.5mm in order, as described above, to reduce thermomechanical forces arising from difference in TEC (Thermal Expansion Coefficient) between the sub-stacks and the connection plate or between a full-size stack and an adjacent current collector.

In an embodiment the connection plate has holes at the manifolds that needs to be sealed that is slightly larger than the manifold holes in the sub-stacks or full-size stack. These slightly larger holes are made to accommodate space for axial gaskets (which may for instance be circular) that are placed in the connection plates. By inserting a single gasket in a hole rather than two gaskets from each side in grooves (for each gas connection) a much thinner connection plate can be made.

In an embodiment, the axial type gaskets are made of a high temperature gasket material for instance "Flexitallic". The gaskets are originally thicker than the connection plate, for instance 1mm gasket in a 0.5mm connection plate. The reason for the thicker gasket than the connection plate is to be able to compress the gasket to acquire a tight interface to each sub-stack and tightness of the gasket itself, or a full-size stack and an adjacent current collector.

When assembling the sub-stacks or a full-size stack and an adjacent current collector and adding operational compression on the assembled stack, the gaskets between the sub-stacks or between the full-size stack and an adjacent current collector (inserted in the connection plate), are compressed to the thickness of the connection plate. This compression ensures compression of the gasket AND creating electrical contact between the sub-stacks or between the full-size stack and an adjacent current collector on the entire footprint of the stack as the connection plate is compressed.

In an embodiment an inner metallic ring can be inserted on the inside of the gasket inserted in the connection plate. This inner ring has the same height (or slightly less than) of the connection plate and is made of the same material (or similar) as the connection plate. The idea of the inner ring is to support the gasket to avoid blow-in when the gasket is subjected to a high external pressure for instance in the order of 1-20 bar. The inner ring can thus be regarded as a way of reinforcing the gasket solution of the sub-stack connection or the full-size stack and an adjacent current collector connection to be able to accommodate large pressure differences across the gasket.

An effect of the invention is the possibility to disassemble the sub-stacks or the full-size stack and an adjacent current collector after operation, as the sub-stacks or the full-size stack and an adjacent current collector are connected/tightened by a compressible gasket and not glued, braced, glassed, or welded together.

In another embodiment solution of the sealing/gasket problem, to compress a gasket to get tightness in connection with an electrical contact on the remaining surface is to insert the gasket in a recess of the connection plate. The recess can be positioned on either side of the connection plate, where gas tightness is required, the recess may also be on both sides of the connection plate to achieve tightness towards both sub-stacks or between a full-size stack and an adjacent current collector.

Producing sub-stacks and combining them to full size stacks has the mentioned effect of increasing yield in production as mentioned in background of invention. The proposed sub-stack connection or full-size stack and an adjacent current collector connection minimizes the thermal gradients at the sub-stack or full-size stack ends due to its small thermal mass actually approaching the mass of the components e.g., the interconnects of the SRU. This ensures optimal operating conditions can be achieved and mechanical stresses are minimized at the sub-stack or/and full-size stack ends minimizing the risk of failure.

The proposed sub-stack or full-size stack and an adjacent current collector connection is a simple and robust solution with only a few parts. The solution is easy to assemble and does not require a production step to assemble the sub-stacks and/or or full-size stack and an adjacent current collector - they are simply stacked and put into operation.

The large contact surface of the connection plate ensures a well distributed contact and current to the sub-stacks and/or or full-size stack and the small axial gasket minimizes the sealing area and thus increases tightness of the connection.

Inserting a thicker gasket in the connection plate and compressing the gasket to the thickness of the connection plates is a simple and robust way to ensure good uniform electrical contact between the sub-stacks and/or or between a full-size stack and an adjacent current collector and ensure adequate compression of the compressible gasket to ensure tightness.

Optionally adding a metal reinforcing ring on the inner diameter of the gasket of same or slightly smaller thickness offers protection against gasket blow-in, when the gasket is subjected to a large pressure difference in the range of 1-20 bar.

In an embodiment of the invention according to claim 1, a solid oxide cell stack comprises a plurality of stacked single repeat units, each single repeat unit comprises a solid oxide cell and an interconnect, one interconnect separates one cell from the adjacent cell in the cell stack as also described in the above. The solid oxide cell stack also comprises at least two solid oxide cell sub-stacks with a plurality of stacked single repeat units; accordingly, the solid oxide cell stack with its plurality of single repeat units is divided in to two or more groups of single repeat units which are here and as discussed in the above named as sub-stacks. The solid oxide cell stack further comprises at least one connection plate. The connection plate is enabled to provide uniform electrical connection across the cross-sectional area of the solid oxide cell stack between two adjacent solid oxide cell sub-stacks. As a further important feature of the invention, the connection plate is further enabled to provide gas sealing around at least one manifold hole (which provides a passage for process fluid(s) in said solid oxide cell stack. To accomplish this gas sealing, the connection plate comprises at least one gasket zone. The gasket zone comprises a hole in the connection plate corresponding a manifold hole of the solid oxide cell stack (and thus the two adjacent solid oxide cell sub-stacks), and the gasket zone also comprises at least one gasket. The at least one gasket zone is surrounding said at least one manifold hole, i.e. one gasket zone is surrounding one manifold hole. The thickness of the gasket zone during compression of the solid oxide cell stack is equal to the thickness of the connection plate. Thus, when the solid oxide cell stack is compressed, for instance during operation, the one or more gasket zone(s) will have a thickness which is equal to the thickness of the connection plate and the solid oxide cell sub-stacks thus faces an even surface of the connection plate. It is to be understood off course that the thickness of the gasket zones during compression is not necessarily exactly mathematical equal to the thickness of the connection plate as all the components of the solid oxide cell stack including the SRU and the connection plates are manufactured within certain tolerances as is normal in the field and in the industry.

In a specific embodiment of the invention, each of the above-described gasket zones comprises one single gasket only. The one gasket of each gasket zones is arranged within a gasket hole in the connection plate. Only one gasket in each gasket zone has the advantage of simplicity and a minimum of parts. To be able to provide the above-described gas sealing, the thickness of said gasket when the gasket is not compressed is larger than the thickness of the connection plate. Thus, when the solid oxide cell stack (and thus all the solid oxide cell sub-stacks) is compressed, the gasket is forced between two opposing surfaces (the nearest SRU's on either side of the contact plate) and sealing is provided. It is to be understood that the gasket as known in the art is compressible and/or deformable and thus provides sealing.

In a further embodiment of the invention, the circumference of the gasket hole is larger than the outer circumference of the gasket. This provides space/volume for the gasket to deform into, while providing sealing when the solid oxide cell stack is subjected to a compression force as already described.

In another embodiment of the invention, each gasket zone comprises not only one, but two gaskets. The two gaskets of each gasket zone are arranged opposite each other on either side of the connection plate and around a hole in the connection plate which corresponds to an adjacent manifold hole. It is to be understood that corresponds may mean that the holes have the same or nearly the same centres, but also other meanings are possible. In this embodiment, the connection plate comprises a recess on either side in each gasket zone, each recess opposing the other, and each recess is adapted to contain a gasket, thus the position of the gaskets relative to the connection plate is to an extent provided by the recesses. The thickness of the connection plate within the opposing recesses plus the thickness of the two gaskets is larger than the thickness of the remaining connection plate when the gaskets are not compressed, which provides for the wished sealing in the same way as described in the above when the solid oxide cell stack is compressed e.g. during operation.

Analogue to the embodiment of the invention with one gasket for each gasket zone also in this embodiment of the invention with two gaskets for each gasket zone, there is an embodiment where the outer circumference of the recess is larger than the outer circumference of the gasket. Again, this has the advantage that when the gaskets are compressed and/or deformed when the entire solid oxide cell stack is compressed, the surplus space provided by the larger recess enables the gasket to deform into this space, while providing sealing.

In an embodiment of the invention, each gasket zone further comprises an inner stabilization ring, adapted to support the inner circumference of the at least one gasket. The inner stabilization ring provides for a well-defined free cross-sectional area for the process fluid to flow through, thus avoiding this area to be compromised by the gasket when it is compressed and/or deformed. Also more important, the stabilization ring provides for securing the at least one gasket against blow-in in cases where the solid oxide cell stack is operated with pressure differences between layers in the stack (such as anode and).

In an embodiment of the invention, the inner stabilization ring has an inner circumference equal to or larger than a corresponding manifold hole of the solid oxide cell stack, hence the process fluid flow through the manifold hole is not restricted by the connection plate. Furthermore, the inner stabilization ring has an outer circumference smaller than the inner circumference of the at least one gasket, and a thickness equal to or smaller than the thick-ness of the connection plate, such that the stabilization ring does not restrict the compression of the solid oxide cell stack.

In an embodiment of the invention each hole in the connection plate corresponding a manifold hole, has a larger circumference than the corresponding manifold hole, large enough to provide an area for the at least one gasket without restricting flow in the manifold. Not to restrict the flow it is also of importance that the hole in the connection plate and the corresponding manifold hole have the same centre (within tolerances) as also discussed in the above.

In a specific embodiment, each gasket and each manifold hole and each hole in the connection plate is circular. This provides advantages such as ease of production, enhanced process fluid flow and good sealing in the gasket zone.

In an embodiment of the invention, the force for compression of said solid oxide cell stack and thus each of the solid oxide cell sub-stacks is larger than the compression force for the total number of gaskets on the connection plate, large enough to provide uniform electrical connection across the cross-sectional area of the solid oxide cell stack between said solid oxide cell sub-stacks. Thus, when compressing the solid oxide cell stack, there is not only force enough to compress and/or deform the total number of gaskets comprised in the connection plate and thereby providing effective sealing, but surplus compression force to ensure uniform contact and thus electrical connection between the stacked solid oxide cell sub-stacks across the entire cross-sectional area of the solid oxide cell stack.

In a specific embodiment of the invention, the thickness of the contact plate is small enough to enable the contact plate to adapt to the surface and unevenness of the adjacent solid oxide cell sub-stacks and large enough to be self-supporting during production. It is to be understood that this thickness is dependant of the material of the connection plate and the size/area of the connection plate among other. Hence, in specific embodiments of the invention, the thickness of the contact plate is between 0.2 and 1.6 mm; and in a further embodiment of the invention, the contact plate is made of steel, or other suited material. In further specific embodiments of the invention, the thickness of the contact plate is equal to (within production and/or feasible tolerances) the thickness of the interconnect; and in a further embodiment the contact plate is made of the same material as the interconnect. Both of these latest described embodiments have the advantages, among others that the TEC of the connection plates are quite similar to the TEC of the solid oxide cell stack or at least to a large extent (the interconnect does have flow fields) similar to the interconnects of the solid oxide cell stack. In further embodiments of the invention, the connection plate is coated; in a specific embodiment, the coating comprises Ni or Cu, or both Ni and CU.

In an embodiment of the invention, the surface area of the one or more single repeat units facing the at least one gasket, is an even surface area which is large enough to provide gas sealing to the gasket around a manifold hole, thus the surface of the areas facing the at least one gasket is adapted to be best suited for effective sealing against process fluid leakage.

In a specific embodiment of the invention, the solid oxide cell stack is a solid oxide electrolysis cell stack; and in a further embodiment, the solid oxide cell stack is a solid oxide electrolysis cell stack, and the contact plate comprises gaskets around one or more manifold holes. The contact plate may comprise gaskets around all the manifold holes of the solid oxide electrolysis cell stack, but in a specific embodiment, the contact plate comprises gaskets around the one or more oxy side manifold holes, but no sealing around the at least one fuel side manifold hole. This may be advantageous if a certain amount of process fluid flush is desirable around the fuel side manifold hole according to the process.

As also discussed in the above, the connection plate may both be used between the entire solid oxide cell sub-stacks, but also between the solid oxide cell stack and adjacent end plate(s). Thus, in an embodiment of the invention the at least one connection plate is further enabled to provide uniform electrical connection across the cross sectional area of the solid oxide cell stack between one sub-stack of said solid oxide cell stack and an adjacent sub-stack of said solid oxide cell stack and the connection plate is further enabled to provide gas sealing around at least one manifold hole in said solid oxide cell stack and an adjacent end plate and the connection plate is further enabled to provide gas sealing around at least one manifold hole in said solid oxide cell stack.

### FEATURES OF THE INVENTION

1. Solid oxide cell stack comprising a plurality of stacked single repeat units, each single repeat unit comprises a solid oxide cell and an interconnect, one interconnect separates one cell from the adjacent cell in the cell stack, wherein the solid oxide cell stack comprises at least two solid oxide cell sub-stacks with a plurality of stacked single repeat units, and the solid oxide cell stack further comprises at least one connection plate 01 enabled to provide uniform electrical connection across the solid oxide cell stack cross sectional area between two adjacent solid oxide cell sub-stacks and the connection plate is further enabled to provide gas sealing around at least one manifold hole 03 in said solid oxide cell stack, wherein said connection plate comprises at least one gasket zone comprising a hole in the connection plate corresponding a manifold hole, and comprising at least one gasket 04 and surrounding said at least one manifold hole, the thickness of said gasket zone during compression of the solid oxide cell stack is equal to the thickness of the connection plate.
2. Solid oxide cell stack according to feature 1, wherein each gasket zone comprises one gasket arranged within a gasket hole in the connection plate, the thickness of said gasket when the gasket is not compressed is larger than the thickness of the connection plate.
3. Solid oxide cell stack according to feature 2, wherein the circumference of said gasket hole is larger than the outer circumference of the gasket.
4. Solid oxide cell stack according to feature 1, wherein each gasket zone comprises two gaskets arranged opposite each other on either side of the connection plate and around a hole in the connection plate which corresponds to an adjacent manifold hole, the connection plate comprises a recess on either side in each gasket zone one recess opposing the other, each recess is adapted to contain a gasket, the thickness of the connection plate within the opposing recesses plus the thickness of the two gaskets is larger than the thickness of the remaining connection plate, when the gaskets are not compressed.
5. Solid oxide cell stack according to feature 4, wherein the outer circumference of said recess is larger than the outer circumference of the gasket.
6. Solid oxide cell stack according to feature 2, wherein the circumference of said gasket hole is larger than the outer circumference of the gasket.
7. Solid oxide cell stack according to any of the preceding features, wherein each gasket zone further comprises an inner stabilization ring 05, adapted to support the inner circumference of the at least one gasket.
8. Solid oxide cell stack according to feature 7, wherein said inner stabilization ring has an inner circumference equal to or larger than a corresponding manifold hole, an outer circumference smaller than the inner circumference of the at least one gasket, and a thickness equal to or smaller than the thickness of the connection plate.
9. Solid oxide cell stack according to any of the preceding features, wherein each hole in the connection plate corresponding a manifold hole has a larger circumference than the corresponding manifold hole, large enough to provide an area for the at least one gasket without restricting flow in the manifold.
10. Solid oxide cell stack according to any of the preceding features, wherein each gasket and each manifold hole and each hole in the connection plate is circular.
11. Solid oxide cell stack according to any of the preceding features, wherein the force for compression of said solid oxide cell stack is larger than the compression force for the total number of gaskets on the connections plate, large enough to provide uniform electrical connection across the cross-sectional area of the solid oxide cell stack between said solid oxide cell sub-stacks.
12. Solid oxide cell stack according to any of the preceding features, wherein the thickness of the contact plate is small enough to enable the contact plate to adapt to the surface and unevenness of the adjacent solid oxide cell sub-stacks and large enough to be self-supporting during production.
13. Solid oxide cell stack according to any of the preceding features, wherein the thickness of the contact plate is between 0.2 and 1.6 mm.
14. Solid oxide cell stack according to any of the preceding features, wherein the contact plate is made of steel, or other suited material.
15. Solid oxide cell stack according to any of the preceding features, wherein the connection plate is coated.
16. Solid oxide cell stack according to any of the preceding features, wherein the connection plate is coated with Ni or Cu, or both Ni and CU.
17. Solid oxide cell stack according to any of the preceding features, wherein the thickness of the contact plate is equal to the thickness of the interconnect.
18. Solid oxide cell stack according to any of the preceding features, wherein the contact plate is made of the same material as the interconnect.
19. Solid oxide cell stack according to any of the preceding features, wherein the surface area of the one or more single repeat unit facing the at least one gasket, is an even surface area which is large enough to provide gas sealing to the gasket around a manifold hole.
20. Solid oxide cell stack according to any of the preceding features, wherein the solid oxide cell stack is a solid oxide electrolysis cell stack.
21. Solid oxide cell stack according to any of the preceding features, wherein the solid oxide cell stack is a solid oxide electrolysis cell stack and the contact plate comprises gaskets around the one or more oxy side manifold holes, but no sealing around the at least one fuel side manifold hole.
22. Solid oxide cell stack according to any of the preceding features, wherein the at least one connection plate is further enabled to provide uniform electrical connection across the cross-sectional area of the solid oxide cell stack between said solid oxide cell stack and an adjacent end plate and the connection plate is further enabled to provide gas sealing around at least one manifold hole in said solid oxide cell stack.

### BRIEF DESCRIPTION OF THE DRAWINGS

The invention is further illustrated by the accompanying drawings showing examples of embodiments of the invention.
Fig. 1 shows an isometric top view of a connection plate.
Fig. 2 shows an isometric top detail view of the connection plate of Fig. 1.
Fig. 3 shows a top view of a connection plate.
Fig. 4 shows a side cut detail view of the connection plate of Fig. 3.
Fig. 5 shows a top view of a schematic single repeat unit SRU (with a connection plate and a further SRU underneath hidden from view.
Fig. 6 shows side cut detail view of the SRU of Fig. 5 and a connection plate and a further SRU.

### POSITION NUMBERS

01. Connection plate
02. Manifold hole, center
03. Manifold hole
04. Gasket
05. Inner stabilization ring
06. Single repeat unit, SRU

### DETAILED DESCRIPTION

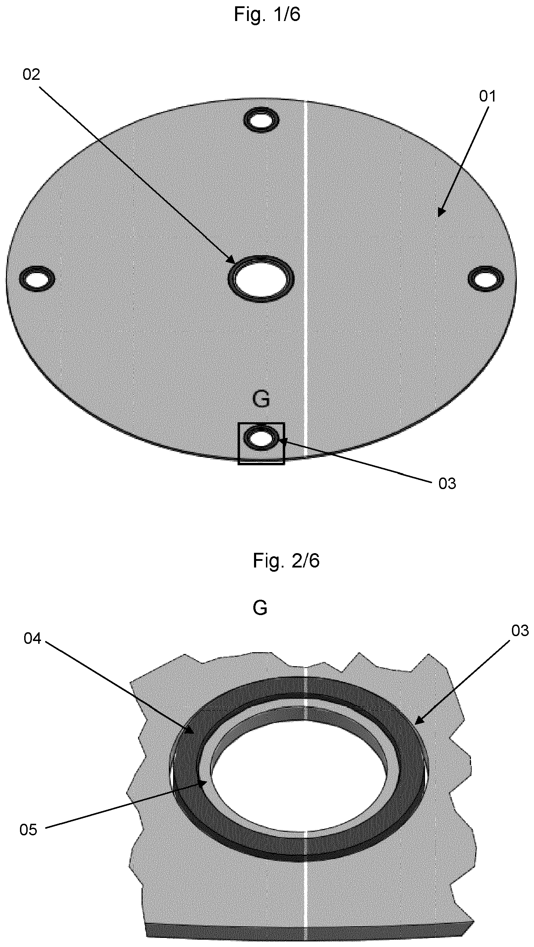

Fig. 1 shows an isometric top view of a connection plate 01 according to an embodiment of the invention. As described in the above, the connection plate is adapted to be arranged between a solid oxide cell stack and an end plate (such as a current collector) and/or between solid oxide cell sub-stacks. The sub-stacks and the end plates are not shown on the figures however, as they are known in the art. The connection plate in this embodiment comprises four manifold holes 03 located adjacent to the periphery of the connection plate and a central manifold hole 02 located in the centre of the connection plate within tolerances as discussed already.

A detailed isometric top view (G) of one of the manifold holes is seen in Fig 2. A gasket 04 is located within each of the manifold holes. As will be more visible in some of the following figures, the thickness of the gasket is larger than the thickness of the connection plate. Hence as discussed above, this is an embodiment of the invention with one and just one gasket for each manifold hole. It can be seen on Fig. 2 that in this embodiment, the manifold hole in the connection plate has a larger circumference than the outer diameter of the gasket when the gasket is not compressed and/or deformed as is the case in Fig. 2. As discussed, this has the advantage that the gasket may deform and fill-into the void created between the inner wall of the connection plate manifold hole and the outer diameter of the gasket, thus providing ability to seal while the gasket thickness is reduced to the thickness of the connection plate when the whole solid oxide cell stack including the connection plate is compressed e.g., during operation. Also visible in Fig. 2 is the inner stabilization ring 05 arranged within the gasket. As discussed, this ring stabilises the gasket against blow-in when subjected to pressure differences on either sides of the sealing gasket and furthermore provides a well-defined inner diameter of the resulting cross-sectional area providing free process fluid flow of the manifold hole.

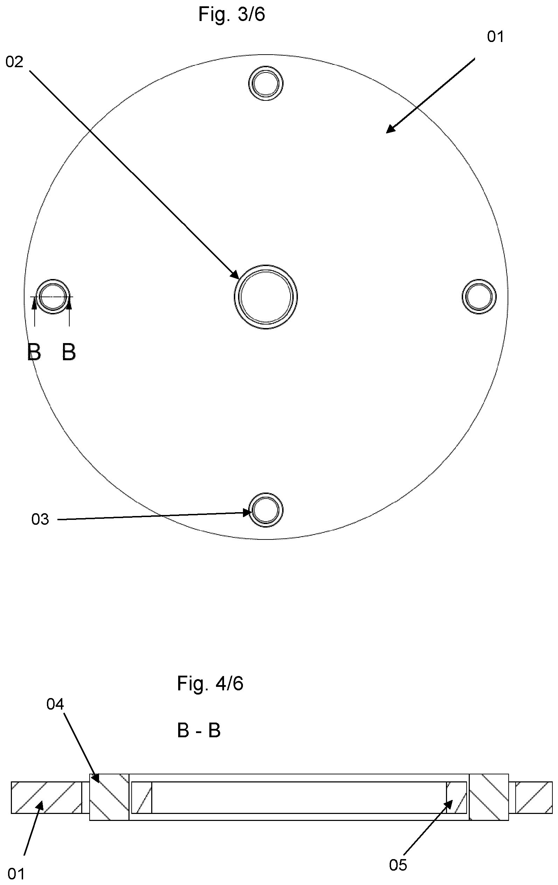

In Fig. 3 almost the same picture of the connection plate as in Fig. 1 is shown, now in top view. However, the detailed side-cut view B-B in Fig 4, here in more detail shows how the gasket is actually thicker (when not subjected to a compression force) than the connection plate as well as the inner stabilization ring. Also, the gap, the free space between the inner circumference of the manifold hole in the connection plate and the outer diameter of the gasket is clearly visible.

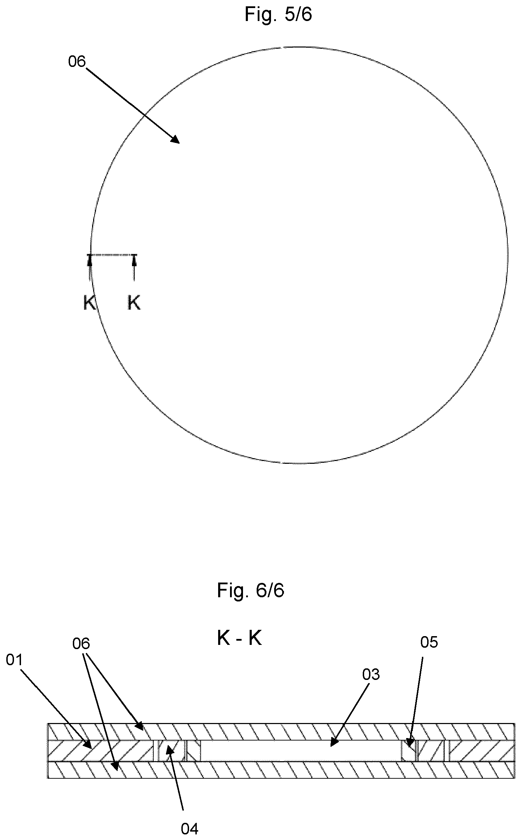

Fig. 5 and its detailed side-cut view in Fig. 6 (K-K) shows an embodiment of the invention where the connection plate is arranged between two solid oxide cell sub-stacks. Not the whole of the solid oxide sub-stacks are shown, only the first SRU's 06 of each solid oxide sub-stacks are shown, the SRU's which are adjacent on each side of the connection plate. It is to be understood, as also discussed in the above that instead of two SRU's, the connection plate could also be arranged between one SRU (on one side) and an end plate (on the other side) according to another embodiment of the invention and as previously discussed. In any case, between two SRU's or between an SRU and an endplate, Fig 6 shows how the gasket thickness is reduced to the same as the thickness of the connection plate, when the whole, the solid oxide cell stack and possibly also end plate(s) is subjected to a compression force, thus providing sealing around the manifold hole without the need for a more cumbersome glass sealing. It is also visible how the stabilization ring provides inner stabilization of the gasket, thus preventing the gasket to blow-out, or rather blow-in into the manifold hole when subjected to pressure differences between the two sides of the gasket. It is to be understood that the stabilization ring does not need to be as thick as the connection plate to provide for necessary stabilization; therefore, in an embodiment of the invention the stabilization ring thickness may be slightly smaller than the connection plate thickness to prevent the stabilization ring from interfering when the whole solid oxide cell stack and possibly end plate(s) are subjected to a compression force. It is namely, as also discussed in the above also an important feature of the connection plate to provide for electrical contact between the elements on either side of the connection plate, be it two SRU's or an SRU and an endplate, throughout the whole cross-sectional area of the connection plate, as this is essential for the operation of the solid oxide cell stack. Therefore, it may also be advantageous as discussed in the above that the compression force on the solid oxide cell stack and possibly the end plate(s) is larger than the force needed to compress the total number of gaskets arranged in the one or more connection plates.

## Claims

1. Solid oxide cell stack comprising a plurality of stacked single repeat units 6, each single repeat unit comprises a solid oxide cell and an interconnect, one interconnect separates one cell from the adjacent cell in the cell stack, wherein the solid oxide cell stack comprises at least two solid oxide cell sub-stacks with a plurality of stacked single repeat units, and the solid oxide cell stack further comprises at least one connection plate 01 enabled to provide uniform electrical connection across the solid oxide cell stack cross sectional area between two adjacent solid oxide cell sub-stacks and the connection plate is further enabled to provide gas sealing around at least one manifold hole 03 in said solid oxide cell stack, wherein said connection plate comprises at least one gasket zone comprising a hole in the connection plate corresponding a manifold hole, and comprising at least one gasket 04 and surrounding said at least one manifold hole, the thickness of said gasket zone during compression of the solid oxide cell stack is equal to the thickness of the connection plate.

2. Solid oxide cell stack according to claim 1, wherein each gasket zone comprises one gasket arranged within a gasket hole in the connection plate, the thickness of said gasket when the gasket is not compressed is larger than the thickness of the connection plate.

3. Solid oxide cell stack according to claim 2, wherein the circumference of said gasket hole is larger than the outer circumference of the gasket.

4. Solid oxide cell stack according to claim 1, wherein each gasket zone comprises two gaskets arranged opposite each other on either side of the connection plate and around a hole in the connection plate which corresponds to an adjacent manifold hole, the connection plate comprises a recess on either side in each gasket zone one recess opposing the other, each recess is adapted to contain a gasket, the thickness of the connection plate within the opposing recesses plus the thickness of the two gaskets is larger than the thickness of the remaining connection plate, when the gaskets are not compressed.

5. Solid oxide cell stack according to claim 4, wherein the outer circumference of said recess is larger than the outer circumference of the gasket.

6. Solid oxide cell stack according to claim 2, wherein the circumference of said gasket hole is larger than the outer circumference of the gasket.

7. Solid oxide cell stack according to any of the preceding claims, wherein each gasket zone further comprises an inner stabilization ring 05, adapted to support the inner circumference of the at least one gasket.

8. Solid oxide cell stack according to claim 7, wherein said inner stabilization ring has an inner circumference equal to or larger than a corresponding manifold hole, an outer circumference smaller than the inner circumference of the at least one gasket, and a thickness equal to or smaller than the thickness of the connection plate.

9. Solid oxide cell stack according to any of the preceding claims, wherein each hole in the connection plate corresponding a manifold hole has a larger circumference than the corresponding manifold hole, large enough to provide an area for the at least one gasket without restricting flow in the manifold.

10. Solid oxide cell stack according to any of the preceding claims, wherein each gasket and each manifold hole and each hole in the connection plate is circular.

11. Solid oxide cell stack according to any of the preceding claims, wherein the force for compression of said solid oxide cell stack is larger than the compression force for the total number of gaskets on the connections plate, large enough to provide uniform electrical connection across the cross-sectional area of the solid oxide cell stack between said solid oxide cell sub-stacks.

12. Solid oxide cell stack according to any of the preceding claims, wherein the thickness of the contact plate is small enough to enable the contact plate to adapt to the surface and unevenness of the adjacent solid oxide cell sub-stacks and large enough to be self-supporting during production.

13. Solid oxide cell stack according to any of the preceding claims, wherein the thickness of the contact plate is between 0.2 and 1.6 mm.

14. Solid oxide cell stack according to any of the preceding claims, wherein the contact plate is made of steel, or other suited material.

15. Solid oxide cell stack according to any of the preceding claims, wherein the connection plate is coated.

16. Solid oxide cell stack according to any of the preceding claims, wherein the connection plate is coated with Ni or Cu, or both Ni and CU.

17. Solid oxide cell stack according to any of the preceding claims, wherein the thickness of the contact plate is equal to the thickness of the interconnect.

18. Solid oxide cell stack according to any of the preceding claims, wherein the contact plate is made of the same material as the interconnect.

19. Solid oxide cell stack according to any of the preceding claims, wherein the surface area of the one or more single repeat unit facing the at least one gasket, is an even surface area which is large enough to provide gas sealing to the gasket around a manifold hole.

20. Solid oxide cell stack according to any of the preceding claims, wherein the solid oxide cell stack is a solid oxide electrolysis cell stack.

21. Solid oxide cell stack according to any of the preceding claims, wherein the solid oxide cell stack is a solid oxide electrolysis cell stack and the contact plate comprises gaskets around the one or more oxy side manifold holes, but no sealing around the at least one fuel side manifold hole.

22. Solid oxide cell stack according to any of the preceding claims, wherein the at least one connection plate is further enabled to provide uniform electrical connection across the cross-sectional area of the solid oxide cell stack between said solid oxide cell stack and an adjacent end plate and the connection plate is further enabled to provide gas sealing around at least one manifold hole in said solid oxide cell stack.

## Patentansprüche

1. Festoxid-Zellstapel, der eine Vielzahl von gestapelten Einzelwiederholungseinheiten 6 umfasst, wobei jede Einzelwiederholungseinheit eine Festoxidzelle und eine Verbindung umfasst, wobei eine Verbindung eine Zelle von der benachbarten Zelle im Zellstapel trennt, wobei der Festoxid-Zellstapel mindestens zwei Festoxid-Zell-Teilstapel mit einer Vielzahl von gestapelten Einzelwiederholungseinheiten umfasst, und der Festoxid-Zellstapel weiter mindestens eine Verbindungsplatte 01 umfasst, der ermöglicht wird, eine gleichmäßige elektrische Verbindung über die Querschnittsfläche des Festoxid-Zellstapels zwischen zwei benachbarten Festoxid-Zell-Teilstapeln bereitzustellen, und der Verbindungsplatte weiter ermöglicht wird, eine Gasabdichtung um mindestens eine Verteileröffnung 03 im Festoxid-Zellstapel bereitzustellen, wobei die Verbindungsplatte mindestens eine Dichtungszone umfassend eine Öffnung in der Verbindungsplatte, die einer Verteileröffnung entspricht, und mindestens eine Dichtung 04 umfasst, und die mindestens eine Verteileröffnung umgibt, wobei die Dicke der Dichtungszone während einer Kompression des Festoxid-Zellstapels gleich der Dicke der Verbindungsplatte ist.

2. Festoxid-Zellstapel nach Anspruch 1, wobei jede Dichtungszone eine Dichtung umfasst, die in einem Dichtungsloch in der Verbindungsplatte angeordnet ist, wobei die Dicke der Dichtung, wenn die Dichtung nicht komprimiert ist, größer ist als die Dicke der Verbindungsplatte.

3. Festoxid-Zellstapel nach Anspruch 2, wobei der Umfang des Dichtungsloches größer ist als der äußere Umfang der Dichtung.

4. Festoxid-Zellstapel nach Anspruch 1, wobei jede Dichtungszone zwei Dichtungen umfasst, die einander gegenüber auf jeder Seite der Verbindungsplatte und um ein Loch in der Verbindungsplatte, das einem benachbarten Verteilerloch entspricht, angeordnet sind, wobei die Verbindungsplatte auf jeder Seite in jeder Dichtungszone eine Aussparung umfasst, die der anderen gegenüberliegt, wobei jede Aussparung angepasst ist, um eine Dichtung zu enthalten, wobei die Dicke der Verbindungsplatte innerhalb der gegenüberliegenden Aussparungen zuzüglich der Dicke der beiden Dichtungen größer ist, als die Dicke der restlichen Verbindungsplatte, wenn die Dichtungen nicht komprimiert sind.

5. Festoxid-Zellstapel nach Anspruch 4, wobei der äußere Umfang der Aussparung größer ist als der äußere Umfang der Dichtung.

6. Festoxid-Zellstapel nach Anspruch 2, wobei der Umfang des Dichtungsloches größer ist als der äußere Umfang der Dichtung.

7. Festoxid-Zellstapel nach einem der vorstehenden Ansprüche, wobei jede Dichtungszone weiter einen inneren Stabilisierungsring 05 umfasst, der angepasst ist, um den inneren Umfang der mindestens einen Dichtung zu stützen.

8. Festoxid-Zellstapel nach Anspruch 7, wobei der innere Stabilisierungsring einen inneren Umfang aufweist, der gleich oder größer als ein entsprechendes Verteilerloch ist, einen äußeren Umfang, der kleiner als der innere Umfang der mindestens einen Dichtung ist, und eine Dicke, die gleich oder kleiner als die Dicke der Verbindungsplatte ist.

9. Festoxid-Zellstapel nach einem der vorstehenden Ansprüche, wobei jedes Loch in der Verbindungsplatte, das einem Verteilerloch entspricht, einen größeren Umfang als das entsprechende Verteilerloch aufweist, der groß genug ist, um eine Fläche für die mindestens eine Dichtung bereitzustellen, ohne den Durchfluss im Verteiler einzuschränken.

10. Festoxid-Zellstapel nach einem der vorstehenden Ansprüche, wobei jede Dichtung, jedes Verteilerloch und jedes Loch in der Verbindungsplatte kreisförmig ist.

11. Festoxid-Zellstapel nach einem der vorstehenden Ansprüche, wobei die Kraft zum Komprimieren des Festoxid-Zellstapels größer ist als die Kompressionskraft für die Gesamtzahl der Dichtungen auf der Verbindungsplatte, groß genug, um eine gleichmäßige elektrische Verbindung über die Querschnittsfläche des Festoxid-Zellstapels zwischen den Festoxid-Zell-Teilstapeln bereitzustellen.

12. Festoxid-Zellstapel nach einem der vorstehenden Ansprüche, wobei die Dicke der Kontaktplatte klein genug ist, um es der Kontaktplatte zu ermöglichen, sich an die Oberfläche und Unebenheit der benachbarten Festoxid-Zell-Teilstapel anzupassen, und groß genug, um während der Produktion selbsttragend zu sein.

13. Festoxid-Zellstapel nach einem der vorstehenden Ansprüche, wobei die Dicke der Kontaktplatte zwischen 0,2 und 1,6 mm liegt.

14. Festoxid-Zellstapel nach einem der vorstehenden Ansprüche, wobei die Kontaktplatte aus Stahl oder einem anderen geeigneten Material gefertigt ist.

15. Festoxid-Zellstapel nach einem der vorstehenden Ansprüche, wobei die Verbindungsplatte beschichtet ist.

16. Festoxid-Zellstapel nach einem der vorstehenden Ansprüche, wobei die Verbindungsplatte mit Ni oder Cu oder beiden, Ni und Cu beschichtet ist.

17. Festoxid-Zellstapel nach einem der vorstehenden Ansprüche, wobei die Dicke der Kontaktplatte gleich der Dicke der Verbindung ist.

18. Festoxid-Zellstapel nach einem der vorstehenden Ansprüche, wobei die Kontaktplatte aus dem gleichen Material wie die Verbindung gefertigt ist.

19. Festoxid-Zellstapel nach einem der vorstehenden Ansprüche, wobei die Oberfläche der einen oder mehreren Einzelwiederholungseinheiten, die der mindestens einen Dichtung zugewandt ist, eine ebene Oberfläche ist, die groß genug ist, um der Dichtung eine Gasabdichtung um ein Verteilerloch herum bereitzustellen.

20. Festoxid-Zellstapel nach einem der vorstehenden Ansprüche, wobei der Festoxid-Zellstapel ein Festoxid-Elektrolysezellstapel ist.

21. Festoxid-Zellstapel nach einem der vorstehenden Ansprüche, wobei der Festoxid-Zellstapel ein Festoxid-Elektrolysezellstapel ist, und die Kontaktplatte Dichtungen um das eine oder mehrere Sauerstoffseiten-Verteileröcher umfasst, jedoch keine Abdichtung um das mindestens eine Brennstoffseiten-Verteilerloch.

22. Festoxid-Zellstapel nach einem der vorstehenden Ansprüche, wobei der mindestens einen Verbindungsplatte weiter ermöglicht wird, eine gleichmäßige elektrische Verbindung über die Querschnittsfläche des Festoxid-Zellstapels zwischen dem Festoxid-Zellstapel und einer benachbarten Endplatte bereitzustellen und der Verbindungsplatte weiter ermöglicht wird, eine Gasabdichtung um mindestens ein Verteilerloch im Festoxid-Zellstapel bereitzustellen.

## Revendications

1. Empilement de cellules à oxyde solide comprenant une pluralité d'unités de répétition uniques 6 empilées, chaque unité de répétition unique comprend une cellule à oxyde solide et une interconnexion, une interconnexion sépare une cellule de la cellule adjacente dans l'empilement de cellules, dans lequel l'empilement de cellules à oxyde solide comprend au moins deux sous-empilements de cellules à oxyde solide avec une pluralité d'unités de répétition uniques empilées, et l'empilement de cellules à oxyde solide comprend en outre au moins une plaque de connexion 01 permettant de fournir une connexion électrique uniforme sur la superficie en coupe transversale d'empilement de cellules à oxyde solide entre deux sous-empilements de cellules à oxyde solide adjacents, et la plaque de connexion permet en outre de fournir une étanchéité aux gaz autour d'au moins un trou de collecteur 03 dans ledit empilement de cellules à oxyde solide, dans lequel ladite plaque de connexion comprend au moins une zone de joint comprenant un trou dans la plaque de connexion correspondant à un trou de collecteur, et comprenant au moins un joint 04 et entourant ledit au moins un trou de collecteur, l'épaisseur de ladite zone de joint durant une compression de l'empilement de cellules à oxyde solide est égale à l'épaisseur de la plaque de connexion.

2. Empilement de cellules à oxyde solide selon la revendication 1, dans lequel chaque zone de joint comprend un joint agencé dans un trou de joint dans la plaque de connexion, l'épaisseur dudit joint lorsque le joint n'est pas comprimé est plus grande que l'épaisseur de la plaque de connexion.

3. Empilement de cellules à oxyde solide selon la revendication 2, dans lequel la circonférence dudit trou de joint est plus grande que la circonférence extérieure du joint.

4. Empilement de cellules à oxyde solide selon la revendication 1, dans lequel chaque zone de joint comprend deux joints agencés à l'opposé l'un de l'autre sur l'un ou l'autre côté de la plaque de connexion et autour d'un trou dans la plaque de connexion qui correspond à un trou de collecteur adjacent, la plaque de connexion comprend un évidement sur l'un ou l'autre côté dans chaque zone de joint, un évidement étant opposé à l'autre, chaque évidement est adapté pour contenir un joint, l'épaisseur de la plaque de connexion dans les évidements opposés plus l'épaisseur des deux joints est plus grande que l'épaisseur de la plaque de connexion restante, lorsque les joints ne sont pas comprimés.

5. Empilement de cellules à oxyde solide selon la revendication 4, dans lequel la circonférence extérieure dudit évidement est plus grande que la circonférence extérieure du joint.

6. Empilement de cellules à oxyde solide selon la revendication 2, dans lequel la circonférence dudit trou de joint est plus grande que la circonférence extérieure du joint.

7. Empilement de cellules à oxyde solide selon l'une quelconque des revendications précédentes, dans lequel chaque zone de joint comprend en outre un anneau de stabilisation intérieur 05, adapté pour supporter la circonférence intérieure du au moins un joint.

8. Empilement de cellules à oxyde solide selon la revendication 7, dans lequel ledit anneau de stabilisation intérieur présente une circonférence intérieure égale à ou plus grande qu'un trou de collecteur correspondant, une circonférence extérieure plus petite que la circonférence intérieure du au moins un joint, et une épaisseur égale à ou plus petite que l'épaisseur de la plaque de connexion.

9. Empilement de cellules à oxyde solide selon l'une quelconque des revendications précédentes, dans lequel chaque trou dans la plaque de connexion correspondant à un trou de collecteur présente une circonférence plus grande que le trou de collecteur correspondant, suffisamment grande pour fournir une zone pour le au moins un joint sans limiter un écoulement dans le collecteur.

10. Empilement de cellules à oxyde solide selon l'une quelconque des revendications précédentes, dans lequel chaque joint, chaque trou de collecteur et chaque trou dans la plaque de connexion sont circulaires.

11. Empilement de cellules à oxyde solide selon l'une quelconque des revendications précédentes, dans lequel la force pour une compression dudit empilement de cellules à oxyde solide est plus grande que la force de compression pour le nombre total de joints sur la plaque de connexion, suffisamment grande pour fournir une connexion électrique uniforme sur la superficie en coupe transversale de l'empilement de cellules à oxyde solide entre lesdits sous-empilements de cellules à oxyde solide.

12. Empilement de cellules à oxyde solide selon l'une quelconque des revendications précédentes, dans lequel l'épaisseur de la plaque de contact est suffisamment petite pour permettre à la plaque de contact de s'adapter à la surface et à l'irrégularité des sous-empilements de cellules à oxyde solide adjacents et suffisamment grande pour être autoportante durant la production.

13. Empilement de cellules à oxyde solide selon l'une quelconque des revendications précédentes, dans lequel l'épaisseur de la plaque de contact est entre 0,2 et 1,6 mm.

14. Empilement de cellules à oxyde solide selon l'une quelconque des revendications précédentes, dans lequel la plaque de contact est fabriquée en acier, ou un autre matériau approprié.

15. Empilement de cellules à oxyde solide selon l'une quelconque des revendications précédentes, dans lequel la plaque de connexion est revêtue.

16. Empilement de cellules à oxyde solide selon l'une quelconque des revendications précédentes, dans lequel la plaque de connexion est revêtue de Ni ou de Cu, ou à la fois de Ni et de Cu.

17. Empilement de cellules à oxyde solide selon l'une quelconque des revendications précédentes, dans lequel l'épaisseur de la plaque de contact est égale à l'épaisseur de l'interconnexion.

18. Empilement de cellules à oxyde solide selon l'une quelconque des revendications précédentes, dans lequel la plaque de contact est fabriquée en même matériau que l'interconnexion.

19. Empilement de cellules à oxyde solide selon l'une quelconque des revendications précédentes, dans lequel la surface des une ou plusieurs unités de répétition uniques faisant face à au moins un joint est une surface régulière qui est suffisamment grande pour fournir une étanchéité aux gaz au joint autour d'un trou de collecteur.

20. Empilement de cellules à oxyde solide selon l'une quelconque des revendications précédentes, dans lequel l'empilement de cellules à oxyde solide est un empilement de cellules d'électrolyse à oxyde solide.

21. Empilement de cellules à oxyde solide selon l'une quelconque des revendications précédentes, dans lequel l'empilement de cellules à oxyde solide est un empilement de cellules d'électrolyse à oxyde solide et la plaque de contact comprend des joints autour des un ou plusieurs trous de collecteur côté oxy, mais aucune étanchéité autour du au moins un trou de collecteur côté combustible.

22. Empilement de cellules à oxyde solide selon l'une quelconque des revendications précédentes, dans lequel la au moins une plaque de connexion permet en outre de fournir une connexion électrique uniforme sur la superficie en coupe transversale de l'empilement de cellules à oxyde solide entre ledit empilement de cellules à oxyde solide et une plaque d'extrémité adjacente, et la plaque de connexion permet en outre de fournir une étanchéité aux gaz autour d'au moins un trou de collecteur dans ledit empilement de cellules à oxyde solide.
